# EUROPEAN PATENT APPLICATION

(11) **EP 2 527 076 A1**
(43) Date of publication of application: **28.11.2012**
(21) Application number: 11734516.5
(22) Date of filing: 20.01.2011
(51) Int. Cl.: B23K 26/20, B23K 33/00, F22B 1/06, G21C 1/02, G21D 1/00, B23K 9/00, B23K 9/028

(54) **DOUBLE-WALLED PIPE, METHOD FOR MANUFACTURING DOUBLE-WALLED PIPE, AND VAPOR GENERATOR**

(30) Priority: 20.01.2010 JP 2010010485
(71) Applicant: Kabushiki Kaisha Toshiba, Minato-ku Tokyo 105-8001 (JP)
(72) Inventor: HINO, Takehisa, Tokyo 105-8001 (JP); TAMURA, Masataka, Tokyo 105-8001 (JP); TANAKA, Yoshimi, Tokyo 105-8001 (JP); KONO, Wataru, Tokyo 105-8001 (JP); SAKAMOTO, Toru, Tokyo 105-8001 (JP); TERASHIMA, Toshinori, Tokyo 105-8001 (JP); SATO, Katsuhiko, Tokyo 105-8001 (JP); JIMBO, Noboru, Tokyo 105-8001 (JP); MARUYAMA, Shigeki, Tokyo 105-8001 (JP)
(74) Representative: Delumeau, François Guy
(86) International application number: PCT/JP2011/000288
(87) International publication number: WO 2011/089909

(57) **Abstract**

A double-walled tube includes: a plurality of double-walled tube forming members, each having an inner tube and an outer tube, connected by welding at welding portions of axis direction end portions thereof; and each of the welding portions of the double-walled tube forming members including a groove having a length in an axis direction set to be equal to or greater than 1/2 of a width of a weld bead formed by the welding at the welding portion.

## Description

### FIELD

Embodiments described herein relate generally to a double-walled tube filled with a wire mesh layer or the like that is intended to he employed in a steam generator of a fast breeder reactor or the like, a method of manufacturing a double-walled tube, and a steam generator.

### BACKGROUND

There has been considered application of a double-walled tube made of modified 9Cr- 1Mo steel to a steam generator of a fast breeder reactor for safety's sake. Further, as the double-walled tube as above, application of a wire mesh filled double-walled tube has been considered. The wire mesh filled double-walled tube is composed of an inner tube, an outer tube, and a netted wire mesh disposed to the interposed in a gap between the inner tube and the outer tube.

In the case of a steam generator, using the wire mesh filled double-walled tube, of a fast breeder reactor, helium (He) gas is filled in the gap (a wire mesh portion) between the inner tube and the outer tube. Then, in the case when the outer tube of the wire mesh fitted double-walled tube is damaged, the helium gas flows into molten sodium (Na), and thus by detecting the above helium gas**,** the damage of the outer tube can be detected.

On the other hand, in the case when the inner tube is damaged, steam flows into the helium gas through a wire mesh layer, and thus by detecting the above steam, the damage of the inner tube can be detected. As above, in the steam generator, using the wire mesh filled double-walled tube, of the fast breeder reactor, the real-time soundness evaluation is made possible_{.}

In the case when the double-walled tube having the above-described composition is used in a steam generator of a fast breeder reactor, the required length of the double-walled tube is extremely lengthened. For this reason, it is necessary to form the double-walled tube having a required length in a manner that a plurality of double-walled tube forming members is connected by welding at axis direction end portions thereof. In order to perform the real-time soundness evaluation in the steal generator, using the above double-walled tube, of the fast breeder reactor, the gap between the inner tube and the outer tube of the double-walled tube is not allowed to be filled at the time of welding. For this reason, with respect also to a welding method for connecting the double-walled tubes to each other, various methods have been proposed. For example, there has been proposed a technique in which a wide groove is provided in an outer tube side, inner tubes are welded by laser welding from the outside via the groove, and then multi-layer welding is performed on the outer tube from the outside by TIG welding (see, for example, Patent Reference I).

### Relevant References

### Patent References

Patent Reference I: JP-A 10-034373 (KUKAI)

### SUMMARY

As described above, in the technique in which a wide groove is provided in an outer tube side, inner tubes are welded by laser welding from the outside via the groove, and then multi-layer welding is performed on the outer tube from the outside by TIG welding, a welding head is made to approach the outer tube side from the outside, and thus the inner tubes can be welded with laser welding by one-pass penetration, but with respect to the V-shaped groove of the outer tube, multi-layer build-up welding is required to be performed, thus causing a problem that time is taken for the welding. Further, the welded positions are located at the same place, and thus in the case when a radiographic examination is performed, the portion where the welded positions are overlapped appears on a film, thus also causing problems that defect determination is difficult to be performed, and the like.

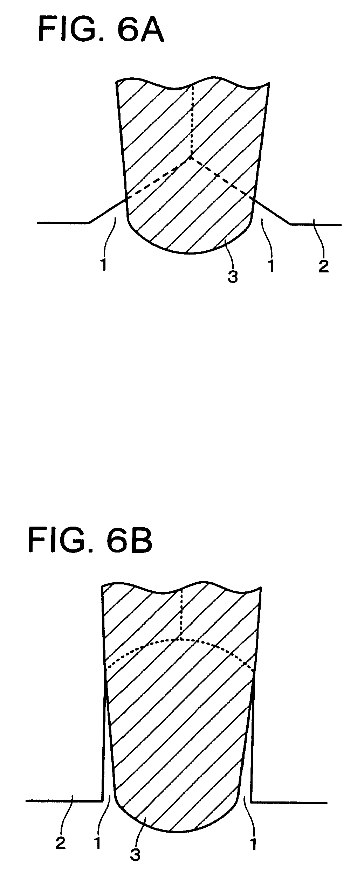

I Further, the interval between the outer tube and the inner tube is extremely narrow in general. which is, for example, 0.4 mm or so, and in order to prevent the gap between the inner tube and the outer tube of the double-walled tube from being filled at the time of welding, a groove shape of double-walled tube base materials 2 is set to a V-shaped groove (a) and a U-shaped groove (h) as illustrated in FIG. 6A and FIG. 6B. and then V notches (V-shaped voids) 1 are each likely to be formed between a penetration bead 3 of the welded portion and the double-walled tube base material 2 when the double-walled tube base materials 2 are welded. Then, when the V notches 1 are formed, stress concentration is likely to occur in the portion, thereby causing a problem that fatigue strength decreases as compared to a smooth portion.

The present invention has been made in consideration of the above-described conventional circumstances, and has an object to provide a double-walled tube in which formation of V notches to be the cause of decrease in strength in a welded portion is allowed to be suppressed and welding is allowed to be performed for a shorter period of time than that require conventionally, a method of manufacturing a double-walled tube, and a steam generator.

According to one embodiment, a double-walled tube includes: a plurality of double-walled tube forming members, each having an inner tube and an outer tube, connected by welding at welding portions of axis direction end portions thereof; and each of the welding portions of the double-walled tube forming members including a groove having a length in an axis direction being equal to or greater than 1/2 of a width of a penetration bead formed by the welding at the welding portion.

According to another embodiment, a double-walled tube includes: a plurality of double-walled tube forming members, each having an inner tube and an outer tube, connected by welding at welding portions of axis direction end portions thereof; and each of the welding portions of the double-walled tube forming members including a groove having a length in an axis direction being equal to or greater than 1/2 of a width of a weld bead formed by the welding at the welding portion.

According to one embodiment, a method of manufacturing a double-walled tube including a plurality of double-walled tube forming members, each having an inner tube and an outer tube, connected by welding at welding portions of axis direction end portions thereof, the method includes: in each of the welding portions of the double-walled tube forming members, providing a groove having a length in an axis direction being equal to or greater than 1/2 of a width of a penetration bead formed by the welding at the welding portion; welding the inner tubes from the inside of the inner tubes; and welding the outer tubes from the outside of the outer tubes.

According to another embodiment, a method of manufacturing the double-walled tube including a plurality of double-walled tube forming members, each having an inner tube and an outer tube, connected by welding at welding portions of axis direction end portions thereof, the method includes: in each of the welding portions of the double-walled tube forming members, providing a groove having a length in an axis direction being equal to or greater than 1/2 of a width of a weld bead formed by the welding at the welding portion, welding the inner tubes from the inside of the inner tubes: and welding the outer tubes from the outside of the outer tubes.

According to one embodiment, a steam generator includes: a vessel through which liquid metal flows: and a heat transformer tube that is housed in the vessel and through which water and steam flow, the heat transformer tube is a double-walled tube including: a plurality of double-walled tube forming members, each having an inner tube and an outer tube, connected by welding at welding portions of axis direction end portions thereof: and each of the welding portions of the double-walled tube terming members including a groove having a length in an axis direction being equal to or greater than 1/2 of with of a penetration head termed by the welding at the welding portion.

According to another embodiment, a steam generator includes: a vessel through which liquid metal flows; and a heat transformer tube that is housed in the vessel and through which water and steam flow; the heat transformer tube being a double-walled tube including: a plurality of double-walled tube forming members, each having an inner tube and an outer tube, connected by welding at welding portions of axis direction end portions thereof, and each of the welding portions of the double-walled tube forming members including a groove having a length in an axis direction set to be equal to or greater than 1/2 of a width of a weld head formed by the welding at the welding portion.

### BRIEF DESCRIPTION OF THE DRAWINGS

FIG. 1 is a view for explaining a welding step of a double-walled tube according to one embodiment.
FIG. 2 is a view schematically illustrating a cross-sectional configuration of an essential part of the double-walled tube according to the one embodiment of the present invention.
FIG. 3 is an enlarged view schematically illustrating the cross-sectional configuration of the essential part of the double-walled tube according to the one embodiment of the present invention.
FIG. 4 is a view for explaining the case when V notches are formed in a welded portion of a double-walled tube.
FIG. 5 is a view schematically illustrating a cross-sectional configuration of a steam generator according to one embodiment of the present invention.
FIG. 6A and FIG. 6B are views each for explaining that V notches are formed in a welded portion in a conventional technique.

### DETAILED DESCRIPTION

Hereinafter, embodiments of a double-walled tube, a method of manufacturing a double-walled tube, and a steam generator of the present invention will be explained in detail with reference to the drawings.

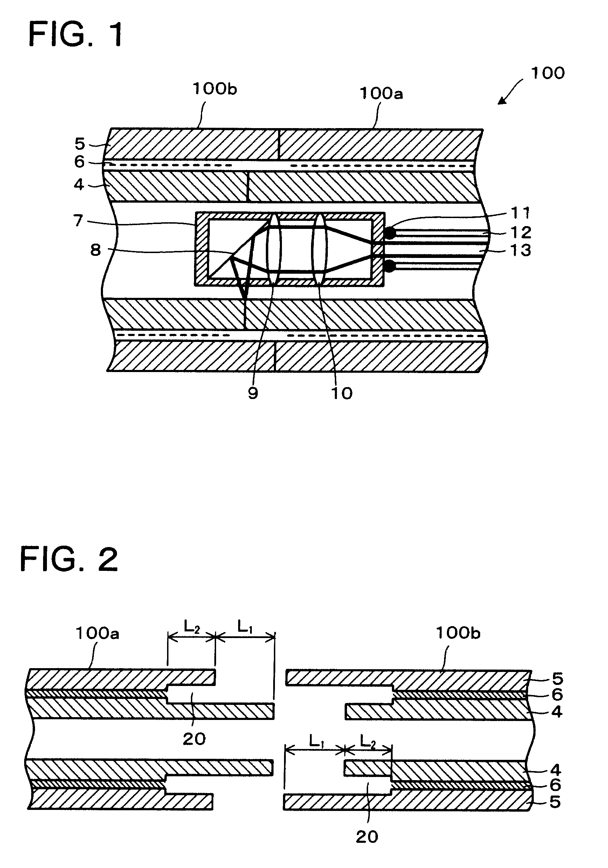

FIG. 1 is a view for explaining a welding step in which double-walled tube forming members are welded to each other when manufacturing a double-walled tube 100 according to one embodiment of the present invention. Double-walled tube forming members 100a and 100b are each composed of an inner tube 4, an outer tube 5, and a wire mesh 6 inserted therebetween to prevent the inner tube 4 and the outer tube 5 from coning into contact with each other directly. The portion in which the above wire mesh 6 is disposed has a gap through which gas is supplied in the axial direction of the double-walled tube, and when welding the double-walled tube forming member 100a and the double-walled tube forming member 100b, as a back sealed gas, an inert gas such as argon gas or helium gas is supplied through the above gap.

A welding head to be inserted into the inside of the inner tubes 4 for welding the inner tubes 4 of the double-walled tube terming member 100a and the double-walled tube terming member 100b to each other incudes a casing 7 formed into a cylindrical shape, and in the casing 7, a reflection mirror 8, a condenser lens 9, and a collimator lens 10 are housed, and are supported by the casing 7.

Further, to the casing 7, there are connected an optical fiber 13 through which laser beam is supplied to the welding head, and a tube (for example, urethane tube) 12 through which an inert gas such as argon gas or helium gas is supplied in order to prevent dirt caused by spatters, fumes and the like of the reflection mirror 8 and the condenser lens 9 at the time of welding. Incidentally, between the tube 12 and the casing 7, an O ring 11 for scaling the gap therebetween is provided.

In this embodiment, by using the welding head having the above-described constitution, the inner tubes 4 of the double-walled tube forming member 100a and the double-walled tube forming member 100b are welded to each other by laser welding. Further, when welding the outer tubes 5 of the double-walled tube terming member 100a and the double-walled tube forming member 100b to each other, welding is performed by laser welding from the outside of the outer tubes 5.

FIG. 2 schematically illustrates a configuration of welding portions of axial direction end portions of the double-walled tube terming member 100a and the double-walled tube forming member 100b in an enlarged manner. As illustrated in the same drawing, the inner tube 4 of one of the double-walled tube forming member 100a and the double-walled tube forming member 100b, which is the double-walled tube forming member 100a in this embodiment, is formed longer than the outer tube 5 by a predetermined length (L₁). Further, the outer tube 5 of the ether double-walled tube forming member 100b is formed longer than the inner tube 4 by the predetermined length (L₁). Thus, the position where the inner tubes 4 are welded and the position where the outer tubes 5 are welded are displaced by the predetermined length (L₁) along the axis direction.

Further, between the inner tube 4 and the outer tube 5, grooves 20 are formed in a manner to widen the interval between the inner tube 4 and the outer tube 5. An axial direction length of each of the above grooves 20 (a depth when each of the grooves 20 is seen from the above) L₂ is set to be equal to or greater than 1/2 of a width of a penetration head formed by the welding. Generally, the interval between the inner tube 4 and the outer tube 5 in the portion in which the wire mesh 6 is disposed is extremely narrow, which is set to be 0.4 mm or so, for example. In contract to this, the interval between the inner tube 4 and the outer tube 5 in the portion of the groove 20 is set to be 0.8 mm or so, for example, and the formation of which the interval between the inner tube 4 and the outer tube 5 is widened is made. The above groove 20 can be formed by cutting an outer surface of the inner tube 4 and cutting an inner surface of the outer tube 5, for example. By cutting the inner tube 4 and the outer tube 5 as above, oxide coating films and the like formed on these surfaces can be removed before the welding, and it is possible to prevent the oxide coating films and the like from adversely affecting the welding, Incidentally, it is a matter of course that in the case when the inner tube 4 or the outer tube 5 has a predetermined thickness, the above-described groove 20 may also be formed in one of them.

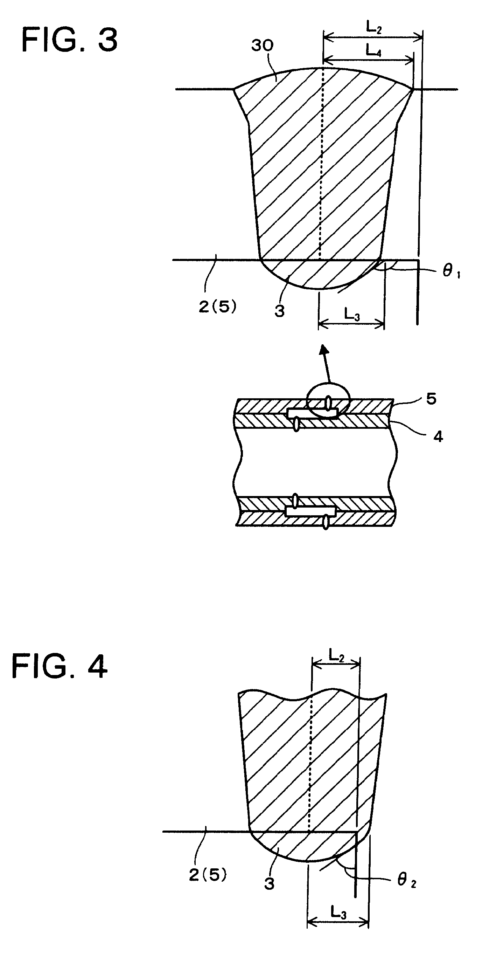

As illustrated in FIG. 3, when the outer tubes 5 in the case of FIG. 3, each being a double-walled tube base material 2, for example, are laser-welded to each other from the outside, a penetration bead 3 is formed on the inner surface of the outer tube 5. Incidentally, in FIG. 3, the welded state of an area, of the double-walled tube, surrounded by a circle, which is illustrated in the bottom of FIG. 3, is illustrated in the top of FIG. 3 in an enlarged manner. In this embodiment, the axial direction length L₂ of the groove 20 is set so that the relationship between 1/2 of the width of the above-described penetration head 3 (L₃ indicated in FIG. 3) and the axial direction length L₂ of the groove 20 may become (1/2 of the width of the penetration head 3 (L₃)) ≤ (the axial direction length (L₂) of the groove 20).
This is because of the reason as below.

That is, when the axial direction length L₂ of the groove 20 is set as describe above, as illustrated in FIG. 3. an angle θ₁ made by the penetration bead 3 and the double-walled tube base material 2 (the outer tube 5 in the case of FIG. 3) becomes 90 degrees or more and no V notches are made. On the other hand, when the axial direction length L₂ of the above-described groove 20 is shorter than 1/2 of the width of the penetration bead 3 (L₃) as illustrated in FIG. 4, for example, an angle θ₂ made by the penetration bead 3 and the double-walled tube base material 2 the outer tube 5 in the case of FIG. 4) becomes 90 degrees or less, and thus V notches are formed.

From the above reason, in this embodiment, the axial direction length L₂ of the groove 20 is set to be equal to or greater than 1/2 of the width of the penetration head 3 (L₃) formed by the welding, and thereby V notches to be the cause of decrease in strength are not formed in the welded portion, and the improvement of reliability can be achieved. The width of the above penetration bead 3 becomes about 2 mm or less, for example, in practice. Thus, the axial direction length L₂ of the groove 20 is only required to be set to be about 1 mm or more, for example.

The penetration bead 3 is formed on the side opposite to the side exposed to laser irradiation (a welding direction) when the welding is performed by laser welding or the like. As illustrated in FIG. 3, the width of the above penetration head 3 does not become equal to or greater than the width of a weld bead 30 formed on the side exposed to the laser irradiation. Thus, as long as the axial direction length L₂ of the above-described groove 20 is set to be equal to or greater than 1/2 of the width of the weld bead 30 (L₄), it is possible to prevent V notches to be the cause of decrease in strength from being formed in the welded portion.

Further, the difference in length between the inner tube 4 and the outer tube 5 (the predetermined length) L₁, which is illustrated in FIG. 2, is preferably set to be about 5 mm or more, for example. This makes it possible to securely prevent the penetration head 3 at the welded portion of the inner tube 4 and the penetration bead 3 at the welded portion of the outer tube 5 from overlapping with each other, and to securely prevent the gap between the inner tube 4 and the outer tube 5 from being blocked. Further, when performing a radiographic examination of the welded portion after the welding, a radiographic image can be obtained in a manner that the welded portion of the inner tube 4 and the welded portion of the outer tube 5 do not overlap with each other.

Incidentally, in the above-described embodiment, the double-walled tube 100 having the inner tube 4. the outer tube 5, and the wire mesh 6 inserted therebetween to prevent the inner tube 4 and the outer tube 5 from conning into contact with each other directly has been described as an example, but this embodiment can be applied also to a double-walled tube having the inner tube 4, the outer tube 5, and a spacer (not illustrated) disposed between the inner tube 4 and the outer tube 5 to prevent the inner tube 4 and the outer tube 5 from corning into contact with each other directly, or a double-walled tube having a groove formed between the inner tube 4 and the outer tube 5 along the entire length of the double-walled tube, in terms of the connection of the double-walled tube.

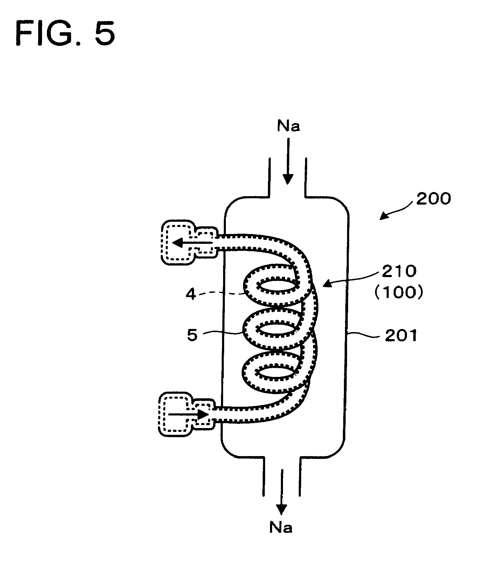

FIG. 5 is a view schematically illustrating a cross-sectional configuration of a steam generator 200 according to one embodiment of the present invention. As illustrated in the same drawing, the steam generator 200 includes a vessel 201 formed into a substantially cylindrical shape, and is designed so that inside the above vessel 201, molten sodium as liquid metal may be made to flow from the top to the bottom as indicated by an arrow in the drawing.

Inside the vessel 201, a heat transformer tube 210 formed of the double-walled tube 100 according to the previously described embodiment and formed into a spiral shape is provided, and is designed so that inside the above heat transformer tube 210, water and steam may be made to flow from the bottom to the top as indicated by an arrow in the drawing. Incidentally, between the inner tube 4 and the outer tube 5 of the double-walled tube 100 forming the heat transformer tube 210, as described previously, helium gas is filled, thereby making it possible to detect damage of the inner tube 4 and the outer tube 5.

In the steam generator 200 in this embodiment, it is possible to suppress formation of V notches to be the cause of decrease in strength in a welded portion of the heal transformer tube 210, so that the improvement of reliability of the heat transformer tube 210 can be achieved. Further, it is possible to prevent the gap between the inner tube 4 and the outer tube 5 from being blocked by the welding, so that damage of the inner tube 4 and the outer tube 5 can be detected securely. Further, the welding can he performed for a shorter period of time than that required conventionally.

While certain embodiments have been described, these embodiments have been presented by way of example only, and are not intended to limit the scope of the inventions. Indeed, the novel embodiments described herein may be embodied in a variety of other forms: furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A double-walled tube, comprising:
a plurality of double-walled tube forming members, each having an inner tube and an outer tube, connected by welding at welding portions of axis direction end portions thereof, and
each of the welding portions of the double-walled tube forming members including a groove having a length in an axis direction being equal to or greater than 1/2 of a width of a penetration bead formed by the welding at the welding portion.

2. A double-walled tube, comprising:
a plurality of double-walled tube forming members each having an inner tube and an outer tube connected by welding at welding portions of axis direction end potions thereof; and
each of the welding portions of the double-walled tube forming members including a groove having a length in an axis direction being equal to or greater than 1/2 of a width of a weld head formed by the welding at the welding portion.

3. The double-walled tube according to claim 1 or 2,
wherein, at the welding portions of the double-walled tube forming members, the inner tube of the double-walled tube forming member on one side is longer than the outer tube by a predetermined length in the axis direction and the outer tube of the double-walled tube forming member on the other side is longer than the inner tube by the predetermined length in the axis direction: and
wherein a position where the inner tubes arc welded to each other and a position where the outer tubes are welded to each other are displaced by the predetermined length in the axis direction.

4. The double-walled tube according to claim 1 or 2.
wherein the groove is in at least one of the two double-walled tube forming members welded at the the welding portions.

5. The double-walled tube according to claim 1 or 2.
wherein each of the double-walled tube forming members has a wire mesh layer between the inner tube and the outer tube.

6. A method of manufacturing a double-walled tube including a plurality of double-walled tube forming numbers, each having an inner tube and an outer tube, connected by welding at welding portions of axis direction end portions thereof.
the method comprising :
in each of the welding portions of the double-walled tube forming members, providing a groove having a length in an axis direction being equal to or grater than 1/2 of a width of a penetration bead formed by the welding at the welding portions:
welding the inner tubes from the inside of the inner tubes; and
welding the outer tubes from the outside of the outer tubes.

7. A method of manufacturing a double-walled tube including a plurality of double-walled tube forming members, each having an inner tube and an outer tube, connected by welding at welding portions of axis direction end portions thereof.
the method comprising:
in each of the welding portions of the double-walled tube forming members, providing a groove having a length in an axis direction being equal to or greater than 1/2 of a width of a weld head formed by the welding at the welding portions:
welding the inner tubes from the inside of the inner tubes: and
wending the outer tubes from the outside of the outer tubes.

8. The method of manufacturing the double-walled tube according to claim 6 or 7. further comprising
forming the inner tube of the double-walled tube forming member on one side longer than the outer tube by a predetermined length in the axis direction and forming the outer tube of the double-walled tube forming member on the other side longer than the inner tube by the predetermined length in the axis direction at the welding portions of the double-walled tube forming members.
wherein a position where the inner tubes are welded to each other and a position where the outer tubes are welded to each other are displaced by the predetermined length in the axis direction.

9. The method of manufacturing the double-walled tube according to claim 6 or 7. further comprising
forming the groove in at least one of the two double-walled tube forming members welded at the welding portions.

10. The method of manufacturing the double-walled tube according to claim 6 or 7.
wherein each of the double-walled tube forming members has a wire mesh layer between the inner tube and the outer tube.

11. The method of manufacturing the double-walled tube according to claim 6 or 7.
wherein the welding is performed by laser welding.

12. A steam generator, comprising:
a vessel through which liquid metal flows; and
a heat transformer tube that is housed in the vessel and through which water and steam flow,
the heat transformer tube being a double-walled tube including:
a plurality of double-walled tube forming members, each having an inner tube and an outer tube, connected by welding at welding portions of axis direction end portions thereof; and
each of the welding portions of the double-walled tube forming members including groove having a length in an axis direction being equal to or greater than 1/2 of a width of a penetration bead formed by the welding at the welding portion.

13. A steam generator, comprising:
a vessel through which liquid metal flows; and
a heat transformer tube that is housed in the vessel and through which water and steam flow:
the heat transformer tube being a double-walled tube including:
a plurality of double-walled tube forming members, each having an inner tube and an outer tube.
connected by welding at welding portions of axis direction end portions thereof: and
each of the welding portions of the double-walled tube forming members including a groove having a length in an axis direction being equal to or greater than 1/2 of a width of a weld head formed by the welding at the welding portion.

14. The steam generator according to claim 12 or 13.
wherein at the welding portions of the double-walled tube forming members, the inner tube of the double-walled tube forming member on one side is longer than the outer tube by a predetermined length in the axis direction and the outer tube of the double-walled tube forming member on the other side is formed longer than the inner tube by the predetermined length in the axis direction; and
wherein a position where the inner tubes are welded to each other and a position where the outer tubes are would to each other are displaced by the predetermined length in the axis direction.

15. The steam generator according to claim 12 or 13.
wherein the groove is in at least one of the two double-walled tube forming members welded at the welding portions.

16. The steam generator according to claim 12 or 13.
wherein each of the double-walled tube forming members has a wire mesh layer between the inner tube and the outer tube.
